# DEMANDE DE BREVET EUROPEEN

(11) **EP 1 806 305 A1**
(43) Date de publication de la demande: **11.07.2007**
(21) Numéro de dépôt: 06290030.3
(22) Date de dépôt: 06.01.2006
(51) Int. Cl.: B65G 65/46

(54) **Dispositif de nettoyage de la paroi de fond d'un silo**

(71) Demandeur: Etablissements DENIS, 28160 Brou (FR)
(72) Inventeur: Lizambard, Stéphane c/o Etablissements Denis, F-28160 Brou (FR)
(74) Mandataire: Fosse, Danièle

(57) **Abrégé**

La présente invention concerne un dispositif de nettoyage de la paroi de fond d'un silo, ce dernier étant du type à fond sensiblement plat et destiné à stocker des produits de type grains ou similaires, susceptibles d'être extraits par un écoulement naturel gravitaire et par un dispositif de vidange du type à vis sans fin, ledit dispositif de nettoyage étant du type comportant au moins un arbre (2) supportant une brosse spiralée (1) reposant sur ladite paroi de fond du silo, ainsi que des moyens d'entraînement en rotation dudit arbre (2) et de ladite brosse (1) autour d'un axe sensiblement horizontal.

L'invention consiste en ce que l'arbre (2) supportant ladite brosse (1) et les moyens d'entraînement en rotation dudit arbre (2) sont agencés sous forme d'un ensemble autoportant, déplaçable et pouvant être fixé de manière amovible sur un dispositif de vidange à vis sans fin.

## Description

L'invention concerne un dispositif de nettoyage de la paroi de fond d'un silo du type à fond sensiblement plat destiné à stocker des grains s'écoulant naturellement par gravité, et plus précisément un dispositif de nettoyage de ce fond après que l'extraction du produit stocké ait été réalisée, dans un premier temps par ladite gravité, puis dans un deuxième temps par un dispositif appelé à vis de vidange intégrale.

Elle s'applique plus particulièrement aux silos stockant des grains de blé, maïs, colza, soja, tournesol, orge, riz, sorgho, pois, etc., que l'on dénommera ci-après, dans un but de simplification, "produit".

Dans ce cadre d'application, il est bien connu de recourir à des silos comprenant une enceinte interne à parois sensiblement verticales et à fond également sensiblement plat. Le fond comporte une ouverture centrale permettant une extraction du produit stocké vers le bas par le simple effet de la gravité.

L'extraction par gravité avec une ouverture centrale dans le fond sensiblement plat du silo crée un volume de produit résiduel limité par la paroi généralement cylindrique du silo, le fond et une surface conique dont la pente correspond à l'angle limite d'écoulement naturel du produit stocké.

Si le silo est destiné au stockage d'un même produit, cet état de fait peut, dans certaines circonstances, être toléré. Cependant, le mélange avec un nouvel arrivage de produit plus frais peut poser problème et, en tout état de cause, si un produit différent doit être stocké, il est nécessaire de vider complètement le silo et d'en nettoyer le fond.

Pour évacuer ce volume de produit résiduel, il est connu de faire appel à des dispositifs comprenant une vis de vidange dite "intégrale". Pour fixer les idées, et à titre d'exemple non limitatif, de tels dispositifs sont mis dans le commerce par la Demanderesse, sous la références commerciale "Vis de Vidange intégrale", Versions "BM" ou "D".

Le dispositif à "vis de vidange intégrale" ou « de vidange du type à vis sans fin » est constitué principalement d'une poutre et d'une vis sans fin, le dispositif étant monté en rotation par rapport à un axe vertical situé au centre du silo. Il est destiné à évacuer radialement et continûment le produit résiduel dans une trémie située à proximité immédiate de cet axe vertical central.

On pourrait penser que la mise en oeuvre de ce dispositif résout entièrement le problème de l'extraction automatique du produit résiduel après la phase d'extraction gravitaire.

En effet, théoriquement, lorsque le dispositif a effectué une rotation complète de 360° autour de l'axe central du silo, tout le produit résiduel a été transporté vers la trémie et extrait du silo via la trémie centrale. Cependant, il n'est pas possible d'obtenir, du moins économiquement, un fond de silo parfaitement plat. Il s'ensuit que, dans la pratique, le fond de silo présente toujours des imperfections de planéité et/ou des parties saillantes telles, par exemple, des grilles de ventilation, de façon générale, des variations de niveau.

La poutre étant rigide, il s'ensuit qu'il est nécessaire de prévoir un jeu pour éviter tout risque de blocage et lui permettre une rotation complète autour de l'axe central vertical. Cependant, ce jeu a pour conséquence qu'une couche de produit résiduelle stagne sur le fond du silo. Avec cette technique de l'art connu, il est donc impossible d'éliminer complètement la couche résiduelle de produit sans avoir recours à une opération manuelle, à l'aide de pelles et de balais, par exemple. Une telle opération est longue, donc coûteuse pour les exploitants du site. En effet les volumes résiduels mis en jeu, compte tenu des dimensions habituelles des silos, restent importants.

Pour fixer les idées, la couche de produit résiduel à évacuer manuellement dans une cellule de silo d'un diamètre typique de 28 mètres représente environ 25 tonnes.

En outre, l'opération implique la présence d'opérateurs humains en fond de cuve et doit être exécutée dans une atmosphère très poussiéreuse, donc pénible pour les exécutants et dangereuse pour la sécurité des sites classés selon des zones définies par des normes relatives aux installations de stockage de céréales.

Le besoin s'est donc fait sentir de ne plus avoir à recourir à une opération manuelle pour extraire complètement le produit stocké et nettoyer entièrement le fond du silo de tout produit résiduel. Tout au contraire, le besoin s'est fait sentir de pouvoir obtenir un nettoyage entièrement automatique.

On a alors proposé, tel que décrit dans la demande de brevet FR 2 859 715 de la Demanderesse, un dispositif de nettoyage d'un silo à fond sensiblement plat destiné à stocker un produit de type grains ou similaires assujetti audit dispositif de vidange intégrale de manière à suivre ledit mouvement de rotation autour dudit axe vertical, et comprenant un arbre supportant une brosse spiralée ou, de façon plus générale, une raclette spiralée appelée ci-après "brosse", reposant sur ladite paroi de fond, des moyens de motorisation imprimant un mouvement de rotation dudit arbre et de ladite raclette autour d'un axe sensiblement horizontal, le sens de ladite rotation étant tel que ladite brosse intercepte et expulse ledit deuxième volume résiduel de produit vers ledit orifice central, de manière à obtenir un nettoyage automatique de ladite paroi de fond et une extraction totale dudit produit.

Si un tel dispositif de nettoyage permet de nettoyer intégralement le fond d'un silo, il présente cependant un inconvénient majeur en ce qu'il est monté de manière fixe sur le dispositif de vidange. De ce fait, il est nécessaire de prévoir dans chaque silo un dispositif de vidange équipé d'un dispositif de nettoyage complémentaire tel que décrit ci-dessus. De tels équipements représentent un coût relativement élevé. De plus, la structure de ce dispositif doit être suffisamment spécifique, c'est-à-dire suffisamment solide pour permettre sa résistance aux conditions d'utilisation en silo, notamment capable de supporter le poids du produit contenu en silo.

Afin de pallier de tels inconvénients, le besoin s'est fait sentir de proposer un dispositif de nettoyage d'un silo à fond sensiblement plat pouvant être adapté sur n'importe quel type de système ou modèle de vis de vidange intégrale déjà existant tout en offrant des performances satisfaisantes au niveau du nettoyage réalisé.

L'invention a donc pour but un dispositif de nettoyage de la paroi de fond d'un silo, ce dernier étant du type à fond sensiblement plat et destiné à stocker des produits de type grains ou similaires susceptibles d'être extraits par un écoulement naturel gravitaire et par un dispositif de vidange du type à vis sans fin, ledit dispositif de nettoyage étant du type comportant au moins un arbre supportant une brosse spiralée reposant sur ladite paroi de fond du silo, ainsi que des moyens d'entraînement en rotation dudit arbre et de ladite brosse autour d'un axe sensiblement horizontal, caractérisé en ce que l'arbre supportant ladite brosse et les moyens d'entraînement en rotation dudit arbre sont agencés sous forme d'un ensemble autoportant, déplaçable et pouvant être fixé de manière amovible sur un dispositif de vidange à vis sans fin quelconque.

Ainsi, de manière avantageuse, comme le dispositif de nettoyage selon l'invention se présente sous la forme d'un ensemble autoportant totalement indépendant du dispositif de vidange à vis sans fin puisque fixé de manière amovible, il peut être utilisé ponctuellement avec un dispositif de vidange à vis sans fin lorsque le silo est vidé sans qu'il soit besoin de le laisser à demeure dans le silo. Il est donc possible d'utiliser un seul dispositif de nettoyage selon l'invention dans des silos différents, par simple fixation sur le dispositif de vidange à vis existant dans chaque silo, indépendamment du type de dispositif de vidange à vis.

De préférence, les moyens d'entraînement en rotation de l'arbre portant la brosse spiralée sont constitués d'un moteur et de moyens de transmission tels que des poulies et des courroies et sont logés dans un carter positionné à une extrémité de l'arbre d'entraînement. Ce carter accueille également dans sa partie inférieure un élément de vis sans fin muni de moyens d'éjection du produit à nettoyer vers l'orifice central du silo et disposé à l'extrémité proche de la zone centrale de l'arbre d'entraînement supportant la brosse spiralée.

De préférence, le moteur est actionnable de manière autonome, c'est-à-dire indépendamment du dispositif de vidange à vis sans fin ou en variante, on peut prévoir qu'il comporte des moyens de raccordement du moteur à une source d'énergie extérieure, notamment prévue sur le dispositif de vidange à vis sans fin.

L'arbre support de la brosse spiralée est relié à au moins une poutre support s'étendant perpendiculairement audit arbre, ladite poutre support portant en outre une roue pivotante ainsi qu'un bras pourvu à une extrémité de moyens appropriés à une fixation amovible sur un dispositif de vidange à vis sans fin. On prévoit de préférence deux poutres supports et donc deux roues pivotantes et deux bras de fixation.

De manière avantageuse, les roues pivotantes permettent un transport relativement simple dudit dispositif selon l'invention ainsi qu'une mise en place aisée en vue de son utilisation.

De manière avantageuse, l'extrémité libre d'un bras de fixation comporte des moyens de fixation amovible sur un dispositif de vidange à vis sans fin. De préférence, ces moyens de fixation amovible sont simples et rapides à mettre en oeuvre pour permettre une mise en place et un enlèvement aisés du dispositif selon l'invention sur un dispositif de vidange à vis sans fin. Ces moyens de fixation permettent notamment une immobilisation en translation radiale du dispositif, en phase de fonctionnement. Ces moyens de fixation peuvent comprendre par exemple au moins une bride de fixation portée par le bras de fixation et permettant de solidariser facilement et rapidement le dispositif selon l'invention sur un élément du dispositif de vidange à vis sans fin.

En particulier, selon une forme préférée de l'invention, celui-ci présente une longueur totale comprise dans la plage de 2 à 5m, de préférence comprise dans le plage de 3 à 4 m. Cette longueur lui permet de s'adapter à des tailles de silos différentes, sa mobilité permettant de la fixer aisément le long du dispositif de vidange à vis sans fin pour effectuer des passes successives de manière à nettoyer l'ensemble de la surface de fond du silo. Ainsi pour les silos de grandes dimensions, on positionne d'abord le dispositif selon l'invention à l'extrémité extérieure du dispositif de vidange à vis sans fin, au plus près de la paroi du silo, puis on le repositionne ensuite vers l'intérieur autant de fois que nécessaires pour balayer l'ensemble de la surface du fond du silo.

Il est également possible de prévoir le dispositif démontable en plusieurs sous-ensembles, par exemple quatre sous-ensembles, de manière simple et rapide, sans l'utilisation d'outillage tel qu'une clé par exemple, pour faciliter le transport par une seule personne.

De préférence, la poutre support comporte en outre des moyens de réglage de la hauteur de l'arbre supportant la brosse spiralée.

Ainsi de manière avantageuse, lors de la fixation du dispositif de nettoyage sur un dispositif de vidange à vis sans fin dans un silo, il est possible de régler la hauteur de ladite brosse spiralée par l'intermédiaire desdits moyens de réglages pour s'adapter aux particularités propres dudit dispositif de vidange à vis sans fin pouvant être différentes du dispositif de vidange à vis sans fin sur lequel le dispositif de nettoyage selon l'invention était précédemment fixé. On peut ainsi adapter la pression de la brosse spiralée au sol et régler de manière optimale le dispositif de nettoyage quelque soit le dispositif de vidange sur lequel il se fixe.

Un dispositif selon l'invention s'installe et se désinstalle de manière simple sur du matériel neuf ou existant et il permet de garantir une parfaite traçabilité des produits stockés car il évite tout risque de mélanges liés au volume résiduel au préalable.

On décrira maintenant l'invention plus en détail en référence au dessin dans lequel :

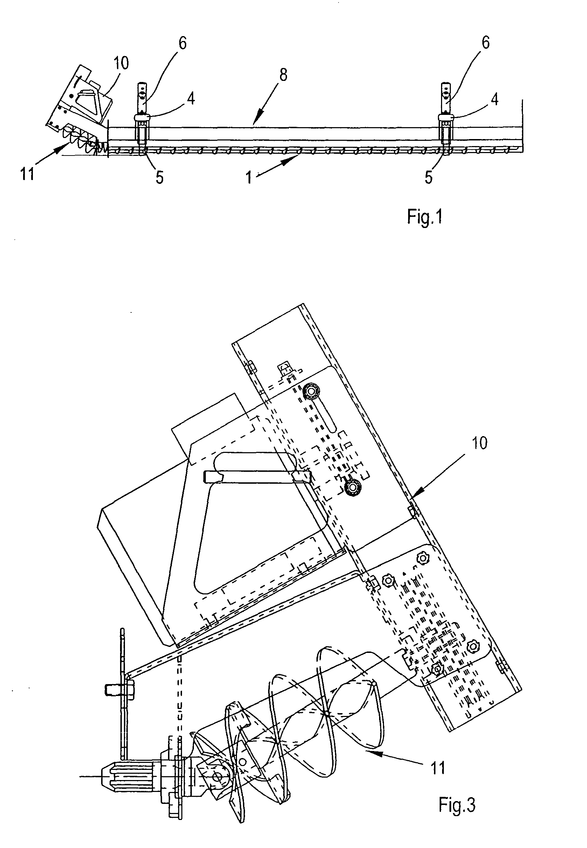

La figure 1 représente une vue en perspective avant d'un dispositif de nettoyage selon l'invention,
La figure 2 représente une vue en perspective latérale d'un dispositif selon la figure 1 monté sur un dispositif de vidange à vis sans fin ;
La figure 3 représente une vue en perspective avant de l'extrémité du dispositif selon l'invention pourvu des moyens d'entraînement en rotation ; et
La figure 4 représente une vue en perspective latérale d'un dispositif selon la figure 1.

Le dispositif de nettoyage selon l'invention comporte une brosse spiralée 1 portée par un arbre d'entraînement 2 permettant son entraînement rotation autour d'un axe horizontal x parallèle à l'axe de rotation x' de la vis sans fin 30 d'un dispositif de vidange.

De préférence, la brosse spiralée 1 est assemblée à une vis sans fin composée d'un filet 1a avec pas à gauche supportant en périphérie des poils flexibles ou de façon plus générale des éléments souples en matériau compatible avec les applications envisagées et d'un tube porte-filet constituant l'arbre d'entraînement 2 comportant à chaque extrémité des moyens de solidarisation de ladite brosse 1 à des tronçons d'arbre transmettant le couple nécessaire au transport du produit. De préférence, les éléments souples de la brosse 1 sont interchangeables, en particulier pour s'adapter au type de produit à balayer.

L'arbre 2 supportant la brosse spiralée 1 est fixé par l'intermédiaire d'un palier 3 à une extrémité d'une poutre support 4 s'étendant perpendiculairement audit arbre d'entraînement 2. Cette poutre support 4 porte également à son autre extrémité une roue pivotante 5 ainsi qu'un bras de fixation 6 permettant la fixation amovible sur un dispositif de vidange à vis sans fin.

Le bras de fixation 6 est monté pivotant à l'une de ses extrémités sur la poutre support 4 sensiblement côté roue de ladite poutre 4.

On prévoit des moyens de réglage en hauteur de la brosse spiralée 1 qui sont constitués par une tige 7 fixée pivotante à l'extrémité de la poutre support 4 côté brosse spiralée, ladite tige 7 présentant par exemple une partie filetée engagée au travers d'un orifice muni d'un taraudage correspondant ménagé dans le bras de fixation 6, le vissage ou dévissage de la tige 7 permettant le réglage en hauteur de la brosse spiralée 1 par pivotement de la poutre support 4 à l'extrémité du bras de fixation 6.

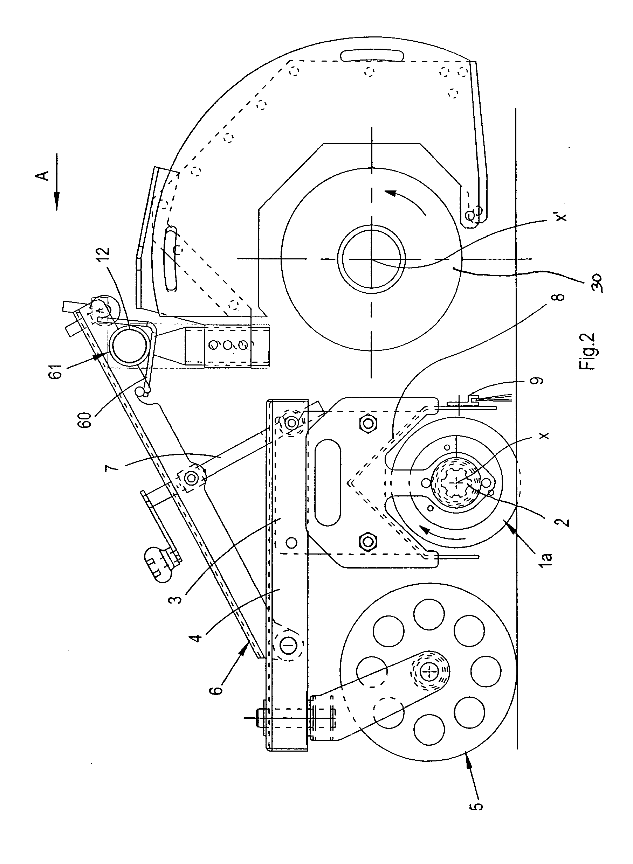

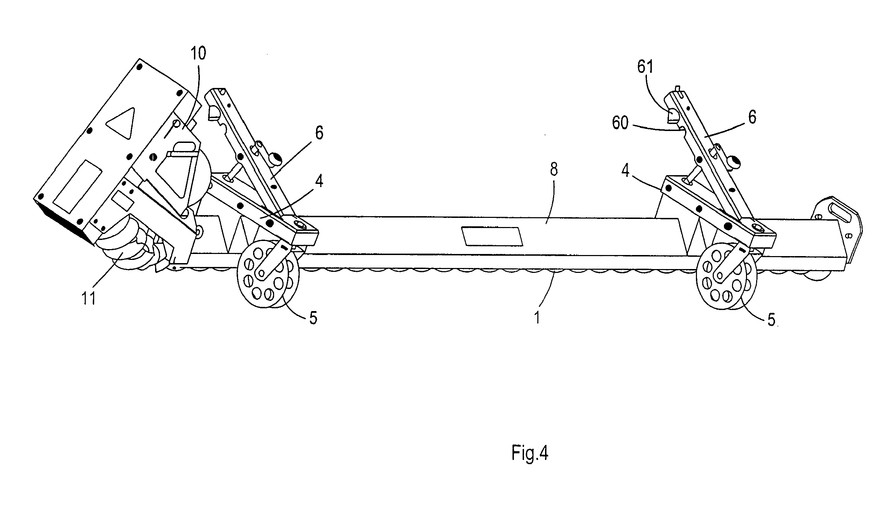

A l'autre extrémité du bras de fixation 6 sont prévus des moyens de fixation amovible permettant une immobilisation rapide et simple à mettre en oeuvre du dispositif selon l'invention sur un dispositif de vidange à vis sans fin. Ces moyens de fixation peuvent être constitués d'une bride de fixation 60 telle que représentée à la figure 2 ou à la figure 3, sensiblement en forme de L propre à retenir un axe tubulaire 12 du dispositif de vidange à vis sans fin, le bras de fixation 6 présentant un évidement 61 de réception dudit axe tubulaire 12, le bras de fixation 6 venant ainsi en prise sur l'axe tubulaire 12 et la bride de fixation 60 permettant le verrouillage de cette prise.

De préférence, la dispositif selon l'invention comprend également un carénage de protection 8 enveloppant ladite brosse spiralée 1 sur le dessus et ayant la forme générale d'un « C » renversé, constituant une poutre rigide, ledit carénage 8 étant muni de préférence dans une zone inférieure d'un élément de nettoyage auxiliaire 9 comprenant des éléments souples linéaires balayant. Un tel carénage 8 permet en outre, lors de nettoyage par passes successives, d'éviter la projection de grains sur les surfaces déjà nettoyées.

Les moyens d'entraînement en rotation de l'arbre 2 portant la brosse spiralée 1 sont constitués d'un moteur et de moyens de transmission tels que des poulies et des courroies qui sont logés dans un carter 10 positionné à une extrémité de l'arbre d'entraînement 2.

Le carter 10 accueille également dans sa partie inférieure un élément de vis sans fin 11 muni de moyens d'éjection du produit à nettoyer vers l'orifice central du silo et disposé à l'extrémité proche de la zone centrale de l'arbre d'entraînement 2 supportant la brosse spiralée 1.

De préférence, comme on peut le voir sur la figure 2, le dispositif de nettoyage selon l'invention est positionné en amont du dispositif de vidange à vis sans fin par rapport au sens d'avancement symbolisé par le flèche A.

Un dispositif selon l'invention peut avantageusement être utilisé pour d'autres applications telles qu'augmenter le diamètre utile de travail, permettant de travailler sur de grands diamètres de silos.

Les exemples n'ont été fournis que pour mieux fixer les idées et ne sauraient constituer une quelconque limitation de la portée de l'invention. Ils procèdent d'un choix technologique à la portée de l'Homme de Métier.

## Revendications

1. Dispositif de nettoyage de la paroi de fond d'un silo, ce dernier étant du type à fond sensiblement plat et destiné à stocker des produits de type grains ou similaires, susceptibles d'être extraits par un écoulement naturel gravitaire et par un dispositif de vidange du type à vis sans fin, ledit dispositif de nettoyage étant du type comportant au moins un arbre (2) supportant une brosse spiralée (1) reposant sur ladite paroi de fond du silo, ainsi que des moyens d'entraînement en rotation dudit arbre (2) et de ladite brosse (1) autour d'un axe sensiblement horizontal,
**caractérisé en ce que** l'arbre (2) supportant ladite brosse (1) et les moyens d'entraînement en rotation dudit arbre (2) sont agencés sous forme d'un ensemble autoportant, déplaçable et pouvant être fixé de manière amovible sur un dispositif de vidange à vis sans fin.

2. Dispositif selon la revendication 1,
**caractérisé en ce que** les moyens d'entraînement en rotation de l'arbre (2) portant la brosse spiralée (1) sont constitués d'un moteur et de moyens de transmission tels que des poulies et des courroies et sont logés dans un carter (10) positionné à une extrémité de l'arbre d'entraînement (2).

3. Dispositif selon la revendication 2,
**caractérisé en ce que** le moteur est actionnable de manière autonome.

4. Dispositif selon la revendication 2,
**caractérisé en ce que** le moteur comporte des moyens de raccordement à une source d'énergie extérieure, notamment prévue sur un dispositif de vidange à vis sans fin.

5. Dispositif selon l'une des revendications 1 à 4,
**caractérisé en ce que** l'arbre (2) support de la brosse spiralée (1) est fixé à au moins une poutre support (4) s'étendant perpendiculairement audit arbre (2), ladite poutre support (4) portant en outre une roue pivotante (5) ainsi qu'un bras (6) pourvu à une extrémité de moyens appropriés à une fixation amovible sur un dispositif de vidange à vis sans fin, tels qu'au moins une bride de fixation.

6. Dispositif selon la revendication 5,
**caractérisé en ce que** les moyens de fixation amovible d'un bras (6) sont constitués, à l'extrémité libre dudit bras de fixation (6), d'un évidement (61) de réception d'un axe tubulaire (12) d'un dispositif de vidange à vis sans fin et d'une bride de fixation (60) permettant le verrouillage dudit axe dans l'évidement (61).

7. Dispositif selon l'une des revendications 5 et 6,
**caractérisé en ce que** la poutre support (4) comporte en outre des moyens de réglage de la hauteur de l'arbre (2) supportant la brosse spiralée (1).

8. Dispositif selon la revendication 7,
**caractérisé en ce que** l'une des extrémités du bras de fixation (6) est montée pivotante sur la poutre support (4) sensiblement côté roue et lesdits moyens de réglage en hauteur de la brosse spiralée (1) sont constitués par une tige (7) fixée pivotante à l'extrémité de la poutre support (4) côté brosse spiralée, ladite tige (7) présentant une partie filetée engagée au travers d'un orifice muni d'un taraudage correspondant ménagé dans le bras de fixation (6), le vissage ou dévissage de la tige (7) permettant le réglage en hauteur de la brosse spiralée (1) par pivotement de la poutre support (4) à l'extrémité du bras de fixation (6).

9. Dispositif selon l'une quelconque des revendications 1 à 8,
**caractérisé en ce qu'** il présente une longueur totale comprise dans la plage de 2 à 5m, de préférence comprise dans le plage de 3 à 4 m.

10. Dispositif selon l'une quelconque des revendications 1 à 9,
**caractérisé en ce qu'**il comprend un carénage de protection (8) enveloppant ladite brosse spiralée (1) sur le dessus et ayant la forme générale d'un « C » renversé, constituant une poutre rigide, ledit carénage (8) étant muni de préférence dans une zone inférieure d'un élément de nettoyage (9) auxiliaire comprenant des éléments souples linéaires.

11. Dispositif selon l'une des revendications 2 à 10,
**caractérisé en ce que** le carter (10) accueille également dans sa partie inférieure un élément de vis sans fin (11) muni de moyens d'éjection du produit à nettoyer vers l'orifice central du silo et disposé à l'extrémité proche de la zone centrale de l'arbre d'entraînement (2) supportant la brosse spiralée (1).
